# EUROPÄISCHE PATENTANMELDUNG

(11) **EP 1 258 621 A2**
(43) Veröffentlichungstag der Anmeldung: **20.11.2002**
(21) Anmeldenummer: 02005238.7
(22) Anmeldetag: 08.03.2002
(51) Int. Cl.: F02D 41/40, F02M 59/32

(54) **Verfahren zum Ansteuern einer magnetventilgesteuerten Kraftstoffpumpe einer Brennkraftmaschine**

(30) Priorität: 19.05.2001 DE 10124510
(71) Anmelder: Volkswagen Aktiengesellschaft, 38436 Wolfsburg (DE)
(72) Erfinder: Dörges, Ulrich, 38539 Müden (DE); Hunkert, Steffen, 38524 Westerbeck (DE)

(57) **Zusammenfassung**

Die Erfindung betrifft ein Verfahren zum Ansteuern einer magnetventilgesteuerten Kraftstoffpumpe einer Brennkraftmaschine, insbesondere eines Pumpe-Düse-Systems, insbesondere einer Brennkraftmaschine mit Direkteinspritzung, insbesondere eines Kraftfahrzeuges, wobei während eines Einspritzvorgangs mittels eines Haltestromes für ein Magnetventil eine Magnetventilnadel derart verschoben wird, daß diese eine Verbindung zwischen einem Hochdruckraum der Kraftstoffpumpe und einem Kraftstoffvorlauf während eines Einspritzverlaufes schließt. Hierbei wird in Abhängigkeit von einer Drehzahl der Brennkraftmaschine der Signalverlauf des Haltestromes eines Einspritzzyklus in seiner Amplitude in wenigstens einem Abschnitt des Einspritzzyklus von einem Zyklus zum nächsten variiert.

## Beschreibung

Die Erfindung betrifft ein Verfahren zum Ansteuern einer magnetventilgesteuerten Kraftstoffpumpe einer Brennkraftmaschine, gemäß dem Oberbegriff des Anspruchs 1.

Eine Kraftstoffeinspritzvorrichtung nach dem Pumpe-Düse-System mit Magnetventilsteuerung ist beispielsweise aus der DE 39 23 271 A1 oder der DE 35 36 828 A1 bekannt. Eine derartige Kraftstoffeinspritzvorrichtung umfaßt einen Ansaugkanal und einen Hochdruckkanal, welcher über ein Steuerventil mit einer Kraftstoffeinspritzdüse verbunden ist. Das Ventilglied des Steuerventils ist von einer elektromagnetischen Stellvorrichtung betätigbar, wobei das Ventilglied in einer ersten Stellung den Hochdruckkanal mit einem druckentlastenden Abströmkanal verbindet und in einer zweiten Stellung die Verbindung zum Abströmkanal sperrt. Die Stellung des Ventilgliedes ist vom Ausgangssignal einer elektrischen Steuereinrichtung bestimmt. Ein Pumpenkolben wird über eine entsprechende Einspritznocke einer Nockenwelle mittels Rollenschlepphebel oder ähnlichem betätigt. Aufgrund der starren Nockenantriebsgeometrie stellt sich in nachteiliger Weise ein entsprechend starres Pumpenkennfeld ein.

Aus der DE 40 04 110 A1 ist ein Verfahren zur Steuerung einer magnetventilgesteuerten Kraftstoffpumpe bekannt. Die Kraftstoffpumpe weist einen von einer Nockenwelle angesteuerten Pumpenkolben auf, der den Kraftstoff unter Druck setzt und damit in einen Zylinder fördert. Über wenigstens ein Magnetventil werden Förderbeginn und Förderende festgelegt, wobei Ansteuersignale für das Magnetventil von einem Steuergerät in Abhängigkeit von auf einer Welle angeordneten Markierungen erzeugt werden. Zur Berechnung der Ansteuersignale werden die Markierungen auf der Welle abgezählt und wird zwischen den Markierungen über die Zeit interpoliert. Die Interpolation hängt dabei von der momentanen Drehzahl N, die unmittelbar vor der Interpolation erfaßt wird, ab. Es wird hierbei der zeitliche Beginn und das Ende eines Einspritzzyklus mit der Drehzahl variiert, um einem zunehmendem Kraftstoffbedarf bei hoher Drehzahl entsprechend Rechnung zu tragen. Die Charakteristik des Ansteuerstromes für das Magnetventil bleibt jedoch konstant, so daß sich mit zunehmender Drehzahl höhere Spitzendrücke des Einspritzdruckes ergeben. Dies hat jedoch den Nachteil, daß die Kraftstoffpumpe und die Einspritzdüse auf einen relativ hohen maximalen Einspritzdruck ausgelegt werden müssen, obwohl dieser im Betrieb nur sehr selten erreicht wird und ggf. nicht notwendig ist. Wegen der linearen Abhängigkeit von Druck und Drehzahl wegen der Nockenbetätigung und zum sicherstellen eines erforderlichen Mindestdruckes bei niedrigen Drehzahlen, läßt sich der hohe Spitzendruck bei hohen Drehzahlen jedoch nicht vermeiden. Um den Spitzendruck bei hohen Drehzahlen zu begrenzen ist es bei diesem System bisher notwendig, Einspritzdüsen mit großem Querschnitt vorzusehen. Dies hat jedoch den erheblichen Nachteil, daß sich im Teillastbereich, welcher im üblichen Betriebsverlauf hauptsächlich angefahren wird, ein negatives Emissionsverhalten ergibt. Ferner steigt mit der Drehzahl durch den sich entsprechend linear erhöhenden Einspritzdruck eine Belastung der Brennkraftmaschine.

Der vorliegenden Erfindung liegt die Aufgabe zugrunde, ein Verfahren der obengenannten Art zur Verfügung zu stellen, wobei die obengenannten Nachteile überwunden werden und auf einfache aber effektive Weise Spitzendrücke während des Einspritzvorgangs bei hohen Drehzahlen reduziert werden, wobei gleichzeitig bei niedrigen Drehzahlen relativ hohe Einspritzdrücke erhalten bleiben.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß in Abhängigkeit von einer Drehzahl der Brennkraftmaschine der Signalverlauf des Haltestromes eines Einspritzzyklus in seiner Amplitude in wenigstens einem Abschnitt des Einspritzzyklus von einem Zyklus zum nächsten variiert wird.

Dies hat den Vorteil, daß unabhängig von dem Betätigungsmechanismus der Kraftstoffpumpe beispielsweise mittels eines Einspritznockens auf einer Nockenwelle, ein sich einstellender Einspritzdruck drehzahlabhängig variiert werden kann. Auf diese Weise ist es beispielsweise möglich, eine gewünschte Charakteristik des Einspritzdruckes in Abhängigkeit von der Drehzahl derart einzustellen, daß sich bei niedriger Drehzahl bereits ein hoher Einspritzdruck ergibt, wogegen der Einspritzdruck bei der Einspritzung mit zunehmender Drehzahl nicht linear sondern degressiv ansteigt, so daß sich bezüglich einer linearen Abhängigkeit von Einspritzdruck und Drehzahl niedrigere Spitzendrücke bei hohen Drehzahlen ergeben. Im Ergebnis wird eine Triebwerksbelastung reduziert und es sind durch ein degressives Verhalten des Einspritzdruckes mit der Drehzahl kleinere Einspritzdüsen realisierbar, wodurch sich in der Teillast ein Emissionsverhalten des Triebwerkes verbessert.

Zum Herstellen des degressiven Verhaltens des Einspritzdruckes in Abhängigkeit von der Drehzahl der Brennkraftmaschine wird die Amplitude mit zunehmender Drehzahl verringert. Hierdurch wird während des Einspritzzyklus gezielt ein Leckage-Abfluß eingestellt, d.h. die Magnetventilnadel ist nicht vollständig geschlossen, wodurch sich ein entsprechend verringerter Druck im Hochdruckraum aufbaut. Insbesondere ist auch der Maximaldruck bzw. Spitzendruck eines Einspritzzyklus niedriger.

Zweckmäßigerweise wird der Signalverlauf des Haltestromes des gesamten Einspritzzyklus in seiner Amplitude drehzahlabhängig von Zyklus zu Zyklus variiert.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine herkömmliche Kraftstoffpumpe in Form eines Pumpe-Düse-Elementes in Schnittansicht,
- Fig. 2: einen herkömmlichen Signalverlauf eines Haltestromes während eines Einspritzvorganges (Einspritzzyklus),
- Fig. 3: einen Signalverlauf eines Haltestromes während eines Einspritzvorganges (Einspritzzyklus) gemäß einer ersten bevorzugten Ausführungsform der Erfindung,
- Fig. 4: Signalverläufe eines Haltestromes während mehrerer aufeinanderfolgender Einspritzvorgänge (Einspritzzyklen) gemäß einer zweiten bevorzugten Ausführungsform der Erfindung und
- Fig. 5: ein erfindungsgemäß erzieltes Drehzahlkennfeld.

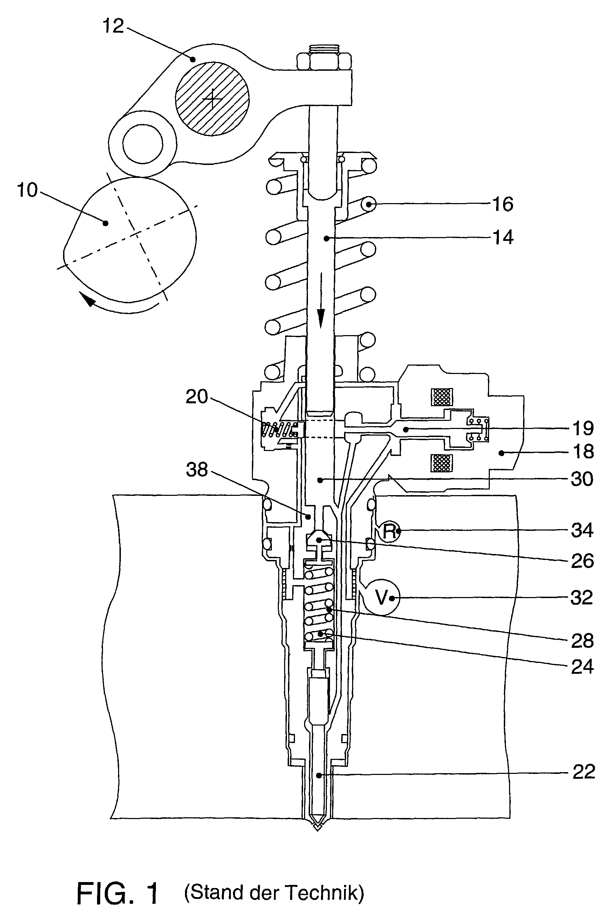

Fig. 1 veranschaulicht den konstruktiven Aufbau eines Pumpe-Düse-Elementes. Ein Einspritznocken 10 wirkt auf einen Rollenkipphebel 12, welcher einen Pumpenkolben 14 betätigt, der gegen eine Pumpenfeder 16 arbeitet. Ein Ventil 18 für das Pumpe-Düse-Element umfaßt eine Magnetventilfeder 20 und Magnetventilnadel 19 und wird von einer nicht dargestellten Motorsteuerung für eine entsprechende Kraftstoffzufuhr betätigt. Eine Düsennadel 22 wird von einer Düsennadelfeder 24 in Schließrichtung mit Kraft beaufschlagt. An einem der Düsennadel 22 abgewandten Ende der Düsennadelfeder 24 ist ein Ausweichkolben 26 angeordnet, welcher einen zwischen Ausweichkolben 26 und Düsennadel 22 ausgebildeten Federraum 28 begrenzt. Der Ausweichkolben 26 ist in einem Gehäuse 38 der Kraftstoffeinspritzdüse derart axial beweglich gelagert, daß er eine Vorspannung der Düsennadelfeder 24 und damit eine auf die Düsennadel 22 einwirkende Schließkraft variiert. In bekannter Weise realisiert die Anordnung des Ausweichkolbens 26 einen Einspritzverlauf mit Vor- und Haupteinspritzung. Die Kraftstoffversorgung erfolgt aus einem Kraftstoffvorlauf 32. Überschüssiger Kraftstoff wird über einen Kraftstoffrücklauf 34 wieder abgeführt.

Ferner ist ein Hochdruckraum 30 vorgesehen, wobei die Magnetventilnadel 19 eine Fluidverbindung zwischen dem Hochdruckraum 30 und dem Kraftstoffvorlauf 32 wahlweise schließt. Hierzu wird das Ventil 18 mit einem entsprechenden Haltestrom angesteuert. Durch das Schließen und Öffnen dieser Fluidverbindung bestimmt die Magnetventilnadel 19 einen zeitlichen Beginn und ein zeitliches Ende eines Einspritzvorganges. Der Haltestrom hat dabei einen zeitlichen variierenden Verlauf über einen Einspritzzyklus. Der Ausdruck "Einspritzzyklus" bezeichnet hierbei einen einzigen, vollständigen Einspritzverlauf über die Zeit bzw. einen vollständigen Signalverlauf des Haltestromes während eines Einspritzvorganges.

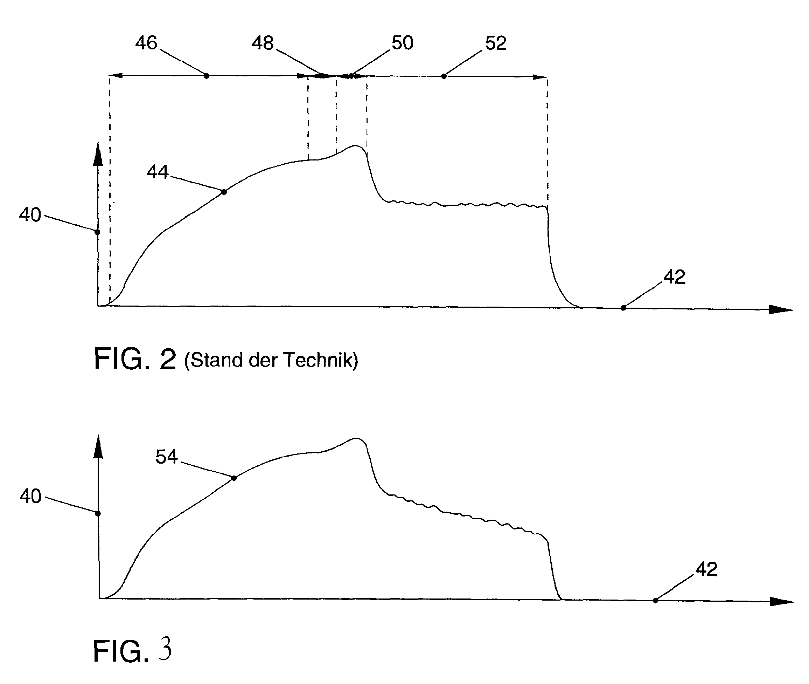

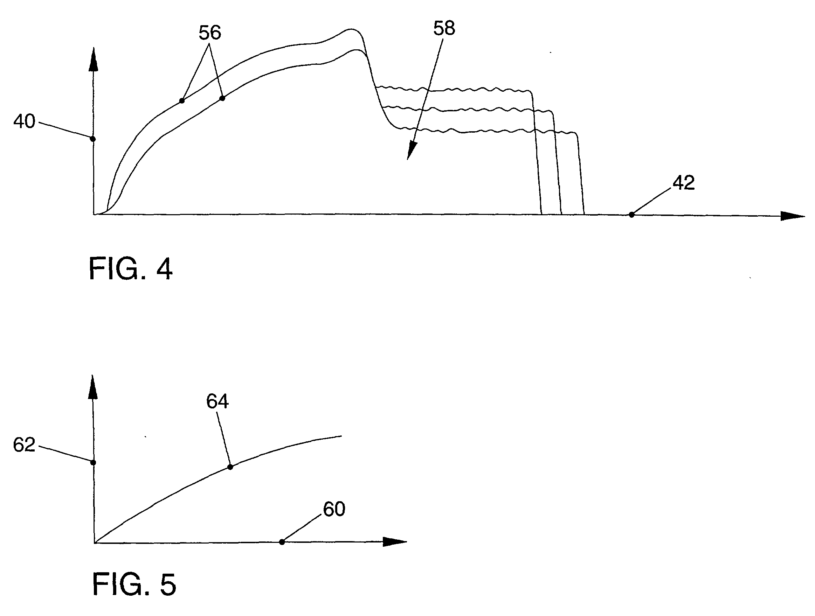

Fig. 2 bis 4 veranschaulichen verschiedene zeitliche Signalverläufe des Haltestroms für einen jeweiligen Einspritzvorgang, d.h. also für einen jeweiligen Einspritzzyklus. In den Fig. 2 bis 4 ist auf der vertikalen Achse 40 ein Haltestrom I_{HALT} in Ampere aufgetragen, während auf der jeweiligen horizontalen Achse 42 ein Kurbelwinkel in °KW aufgetragen ist. Fig. 2 dient lediglich als Vergleich mit einem herkömmlichen Signalverlauf 44. Dieser Signalverlauf 44 umfaßt mehrere Abschnitt. In einem ersten Abschnitt 46 erfolgt ein Anziehen bzw. Schließen der Magnetventilnadel 19. In einem zweiten Abschnitt 48 erfolgt eine Voreinspritzung von Kraftstoff, wobei hier der Druck nach der Voreinspritzung kurz abfällt. In einem dritten Abschnitt 50 erfolgt ein weiterer Druckaufbau unter der fortgesetzten Betätigung des Pumpenkolbens 14 durch die Nocke 10, und in einem vierten Abschnitt 52 erfolgt die Haupteinspritzung von Kraftstoff. Dann fällt das Haltesignal 44 steil ab, so daß die Magnetventilnadel 19 die Fluidverbindung vom Hochdruckraum 30 zum Kraftstoffvorlauf 32 wieder freigibt, wodurch sich der Einspritzdruck entsprechend wieder abbaut, was den Einspritzzyklus entsprechend beendet. Dieser zeitliche Ablauf der verschiedenen Abschnitte eines Einspritzzyklus gilt auch für die folgenden erfindungsgemäßen Signalverläufe gemäß der Fig. 3 und 4.

Erfindungsgemäß ist es vorgesehen, daß von einem Einspritzzyklus zum nächsten die Amplitude des Signalverlaufes des Haltestromes in wenigstens einem Abschnitt des Signalverlaufes in Abhängigkeit von der Drehzahl variiert wird. Hierbei wird mit zunehmender Drehzahl die Amplitude gesenkt, wodurch sich eine verringerte Schließkraft der Magnetventilnadel 19 ergibt. Dies hat einen entsprechenden Leckage-Abfluß von Kraftstoff aus dem Hochdruckraum 30 in den Kraftstoffvorlauf 32 zur Folge, wodurch sich während des Einspritzvorgangs entsprechend erniedrigte Spitzendrücke aufbauen, im Vergleich mit den Spitzendrücken bei herkömmlichem Signalverlauf und entsprechender Drehzahl gemäß Fig. 2.

In der Ausführungsform gemäß Fig. 3 wird der Signalverlauf des Haltesignals 54 im vierten Abschnitt 52 verändert. Mit zunehmender Drehzahl wird eine zunehmend abfallende Flanke in diesem vierten Abschnitt 52 erzeugt, im Gegensatz zu dem konstanten Signalverlauf 44 gemäß Fig. 2.

In der Ausführungsform gemäß Fig. 4 wird der Signalverlauf des Haltesignals 56 in seiner Amplitude im wesentlichen über einen gesamten Einspritzzyklus mit zunehmender Drehzahl verringert. Fig. 4 veranschaulicht die Signalverläufe 56 für drei verschiedene Einspritzzyklen mit unterschiedlichen Drehzahlen, wobei der Pfeil 58 eine zunehmende Drehzahl andeutet. Wie unmittelbar ersichtlich, wird erfindungsgemäß mit zunehmender Drehzahl die Amplitude des Signalverlaufes 58 vor allem im vierten Abschnitt 52 gesenkt, mit entsprechender Verringerung des Spitzendruckes während eines Einspritzvorganges, wie zuvor bereits erläutert.

Fig. 5 veranschaulicht beispielhaft ein Kennfeld, welches durch das erfindungsgemäße Verfahren erzielt wird. Auf der horizontalen Achse 60 ist die Drehzahl und auf der vertikalen Achse 62 ist der Einspritzdruck aufgetragen. Linie 64 veranschaulicht einen Druckverlauf über Drehzahl. Wie ersichtlich, steigt der Druck mit zunehmender Drehzahl moderat und geringer als linear an. Dadurch können bereits bei niedrigen Drehzahlen relativ hohe Einspritzdrücke realisiert werden, ohne dabei gleichzeitig extrem hohe Spitzendrücke bei hohen Drehzahlen in Kauf nehmen zu müssen.

### BEZUGSZEICHENLISTE

- 10: Einspritznocken
- 12: Rollenkipphebel
- 14: Pumpenkolben
- 16: Pumpenfeder
- 18: Ventil
- 19: Magnetventilnadel
- 20: Magnetventilfeder
- 22: Düsennadel
- 24: Düsennadelfeder
- 26: Ausweichkolben
- 28: Federraum
- 30: Hochdruckraum
- 32: Kraftstoffvorlauf
- 34: Kraftstoffrücklauf
- 38: Gehäuse
- 40: vertikalen Achse / Haltestrom I_{HALT} in Ampere
- 42: horizontalen Achse / Kurbelwinkel in °KW
- 44: herkömmlicher Signalverlauf des Haltesiganls
- 46: erster Abschnitt / Anziehen bzw. Schließen der Magnetventilnadel
- 48: zweiter Abschnitt / Voreinspritzung
- 50: dritter Abschnitt / Druckaufbau
- 52: vierter Abschnitt / Haupteinspritzung
- 54: Haltesignal gemäß erster Ausführungsform
- 56: Haltesignale gemäß zweiter Ausführungsform
- 58: Pfeil
- 60: horizontale Achse / Drehzahl
- 62: vertikale Achse / Einspritzdruck
- 64: Druckverlauf über Drehzahl

## Patentansprüche

1. Verfahren zum Ansteuern einer magnetventilgesteuerten Kraftstoffpumpe einer Brennkraftmaschine, insbesondere eines Pumpe-Düse-Systems, insbesondere einer Brennkraftmaschine mit Direkteinspritzung, insbesondere eines Kraftfahrzeuges, wobei während eines Einspritzvorgangs mittels eines Haltestromes für ein Magnetventil eine Magnetventilnadel derart verschoben wird, daß diese eine Verbindung zwischen einem Hochdruckraum der Kraftstoffpumpe und einem Kraftstoffvorlauf während eines Einspritzverlaufes schließt, **dadurch gekennzeichnet, daß** in Abhängigkeit von einer Drehzahl der Brennkraftmaschine der Signalverlauf des Haltestromes eines Einspritzzyklus in seiner Amplitude in wenigstens einem Abschnitt des Einspritzzyklus von einem Zyklus zum nächsten variiert wird.

2. Verfahren nach Anspruch 1, **dadurch gekennzeichnet, daß** die Amplitude mit zunehmender Drehzahl verringert wird.

3. Verfahren nach Anspruch 1 oder 2, **dadurch gekennzeichnet, daß** der wenigstens eine Abschnitt des Einspritzzyklus den Abschnitt einer Haupteinspritzung von Kraftstoff umfaßt.

4. Verfahren nach wenigstens einem der vorhergehenden Ansprüche, **dadurch gekennzeichnet, daß** der wenigstens eine Abschnitt des Einspritzzyklus den Abschnitt eines Anziehens der Magnetventilnadel umfaßt.

5. Verfahren nach wenigstens einem der vorhergehenden Ansprüche, **dadurch gekennzeichnet, daß** der wenigstens eine Abschnitt des Einspritzzyklus den Abschnitt einer Voreinspritzung von Kraftstoff umfaßt.

6. Verfahren nach wenigstens einem der vorhergehenden Ansprüche, **dadurch gekennzeichnet, daß** der Signalverlauf des Haltestromes des gesamten Einspritzzyklus in seiner Amplitude drehzahlabhängig von Zyklus zu Zyklus variiert wird.
